(19) Europäisches Patentamt
European Patent Office
Office européen des brevets

(11) EP 0 907 883 B1

(12) EUROPEAN PATENT SPECIFICATION

(45) Date of publication and mention
of the grant of the patent:
23.09.2009 Bulletin 2009/39

(51) Int Cl.:
G01N 21/35 (2006.01)

(21) Application number: 98923303.6

(86) International application number:
PCT/US1998/007903

(22) Date of filing: 17.04.1998

(87) International publication number:
WO 1998/048260 (29.10.1998 Gazette 1998/43)

(54) **METHOD AND SYSTEM FOR REMOTELY DETERMINING COLUMN DENSITY OF TRACE GASES**

VERFAHREN UND VORRICHTUNG ZUR FERNKONZENTRATIONSMESSUNG VON GASSPUREN

PROCEDE ET SYSTEME POUR DETERMINER A DISTANCE LA DENSITE SUR COLONNE DE PLUSIEURS GAZ A L'ETAT DE TRACES

(84) Designated Contracting States:
DE SE

(30) Priority: 18.04.1997 US 44685 P

(43) Date of publication of application:
14.04.1999 Bulletin 1999/15

(73) Proprietor: Goodrich Corporation
Charlotte, NC 28217-4578 (US)

(72) Inventors:
• HAYDEN, Andreas, F.
Sandy Hook, CT 06482 (US)
• NOLL, Robert, J.
Fairfield, CT 06432 (US)

(74) Representative: Lindner, Michael et al
Witte, Weller & Partner
Patentanwälte
Postfach 10 54 62
70047 Stuttgart (DE)

(56) References cited:
EP-A- 0 604 124    US-A- 3 931 462
US-A- 4 320 975    US-A- 5 371 542
US-A- 5 528 037

• A.HAYDEN, E. NIPLE, B. BOYCE:
"DETERMINATION OF TRACE-GAS AMOUNTS IN
PLUMES BY THE USE OF ORTHOGONAL
DIGITAL FILTERING OF THERMAL-EMISSION
SPECTRA" APPLIED OPTICS, vol. 35, no. 16, 1
June 1996, pages 2802-2809, XP002077330
• A. HAYDEN, R. NOLL: "REMOTE TRACE GAS
QUANTIFICATION USING THERMAL IR
SPECTROSCOPY AND DIGITAL FILTERING
BASED ON PRINCIPAL COMPONENTS OF
BACKGROUND SCENE CLUTTER"
PROCEEDINGS OF THE SPIE-INT.SOCIETY OF
OPTICAL ENGINEERING(USA), vol. 3071, 22 - 23
April 1997, pages 158-168, XP002077329
ORLANDO

**Description**

**Technical Field**

In general, the present invention relates to digital filters, and more specifically to a method for detecting and monitoring atmospheric gases, such as gases emitted from smoke stacks or tail pipes, through use of a gas sensor and a digital filter constructed to correlate only with the spectrum of the gas of interest to yield the density of the gas.

**Related Art**

The detection and measurement of trace gases is often essential in order to adhere to environmental standards and regulations, or process control standards.

As a result, there is a need by civilian and government agencies for a technique of passively detecting and measuring trace gases in a plume using target plume sensors. The sensors may be as close to an emissions source as the base of a smoke stack, or as far away as on an orbiting satellite.

One problem associated with detecting and measuring trace gases is that the spectral signal of interest associated with the trace gas is typically a small part of the overall signal measured by the sensor. It is often difficult for a basic correlation filter to detect this small target signal unless the background component of the measured spectrum is removed.

Several conventional spectral measurement techniques exist. One technique, known as two spectrum differencing, involves measuring a scene and subtracting the background spectrum from the target spectrum.

However, the two pixel differencing does not eliminate spectrally correlated background features in a target spectrum, therefore leading to large errors in gas amount quantification, and leaving a large residual which masks the desired signal.

A second technique, known as model matching, takes a spectral measurement and generates a complex numerical model of the spectrum. The technique then adjusts model parameters until a spectral match is found.

However, model matching techniques typically require long, complex computer runs that require a large amount of operator involvement to adjust the model parameters.

A third known technique is known as an orthogonal background suppression (OBS) technique as for example disclosed in the paper A. Hayden et al. "Determination of trace-gas amounts in plumes by the use of orthogonal digital filtering of thermal-emission spectra", Applied Optics, vol. 35, no. 16, 1 June 1996, pages 2802-2809. OBS techniques are used to measure the column density/thermal radiance contrast product of a gas plume using a passive thermal/ infrared emission spectrometer. Column density refers to the number of molecules per unit area seen by the sensor, while thermal radiance contrast is the difference between the radiance of the scene behind a plume, and a Planck function generated with the temperature of the plume. Such a technique facilitates target signal detection in the presence of low signal to spectral clutter ratio. OBS techniques are based upon the assumption that background spectral clutter can be assumed to be a linear combination of background spectra taken with no target gas in the field of view. Such a technique finds the proper combination of background scene components and removes the components completely from the target spectrum, thereby leaving only the spectrum of the gas of interest, along with associated random noise.

One advantage of the OBS technique is that an optimal linear filter associated with the technique is able to suppress a large background component of a measurement, while yielding the column density thermal radiance contrast product (DCP) of a gas plume in the atmosphere. However, while present OBS techniques exhibit certain desirable results, the techniques are limited in effectiveness in that the techniques cannot separate column density measurement from the thermal radiance contrast measurement.

Therefore, it is an object of the present invention to provide an OBS based technique of passively detecting and measuring trace gases in a gas plume that allows the value of plume column density to be separated from the thermal radiance contrast.

The document "Determination of trace-gas amounts in plumes by the use of orthogonal digital filtering of thermal-emission-spectra", mentioned above, discusses that the thermal emission of gases in a plume can be measured by a Fourier-transform spectrometer that is located some distance from the plume. It is explained that in order to measure quantitatively the amount of a particular gas of interest, in general a large spectrally structured background must be removed. Differencing techniques, in which a measured background spectrum is subtracted from a measured spectrum believed to contain a target, often do not remove background spectral features adequately. A method using Orthogonal Background Suppression (OBS) techniques is shown by which spatial and temporal spectral clutter. Orthogonal linear components of background clutter are found by the application of singular value decomposition (SVD) to a set of background spectra. These components are then removed from a target-plus-background spectrum, leaving as a residual only instrument noise and the spectral signature of interest.

EP 0 604 124 A2 is directed at multispectral signature extraction techniques which are utilized to separate a multispectral electro-optical signal of interest from a background. It is proposed to employ a spectrometer which results the optical spectrum from optics into a multispectral input spectrum. A multispectral spectrum is understood as a signal having a plurality of bands of radiation. In order to function each channel assigned to a band of radiation must comprise a matched filter using a spectral template. N-1 channnels include a known spectral template of a respective one of N-1 targets and the Nth channel includes a known spectral template of the background.

US 5,528,037 discloses a band analysis system for determining the optimal signal-to-noise ratio between the spectral emissions from an object of interest and the spectral emissions from background noise for a target detecting and tracking system. Known target and background spectra are applied to a band select system in order to select an initial choice of bands. These bands are then applied to a sensor model system which determines a template for each spectrum. The templates are applied to a noise generation system in order to generate a noise function indicative of the vibrational noise of the sensor and the electronic noise of the system. The noise function also includes a function of the integration time over each band. The noise function and the templates are then used to determine a signal-to-noise ratio based on a weighting function. The signal-to-noise ratio is applied to the band select system and the integration time select system in order to adjust the bands and their integrations time to the optimum value.

US 5,371,542 is directed at a dual waveband signal processing system (DWSPS) for differentiating between any primary target signal and background clutter to detect targets and objects with a particularly unique spectral characteristic. The DWSPS is responsive to a plurality of sensors operating on different wavelengths. The output wavebands of the sensors are filtered by either spatial or temporal high-pass filters, and is processed through a network comprising a series of multiplies, dividers, comparators, and subtractors to obtain the weighted correlation functions or "alpha coefficient", which, when compared to the input wavebands, produces a filtered or processed output signal of the detected features.

US 4,320,975 discloses a smoke opacity monitor which obtains a measurement of opacity by measuring the proportion of polarized light from the background sky which is detectable through the smoke plume. Compensation and normalization is provided to minimize errors generated by illumination of the plume itself and for the overall intensity of the background sky light.

US 3,931,462 is directed at a method and apparatus for measuring, at a remote location, the concentration and velocity of $SO_2$ in plume from a smokestack. An ultraviolet video system views the plume against the background sky at wavelengths where $SO_2$ molecules absorb light. The result is a real time display of the plume coupled with means for measuring the $SO_2$ concentration at any point in the plume and at any time desired. In addition, means are provided in combination with the ultraviolet video system for measuring the velocity of the $SO_2$ in the plume.

It is an object of the present invention to provide an improved OBS based technique of passively detecting and measuring trace gases in a gas plume. The solution to this object is provided by the method according to claim 1 and by the system according to claim 9.

## SUMMARY OF THE INVENTION

Accordingly, the present invention provides an improved OBS based technique that monitors gas emissions from smoke stacks, tail pipes, and other sources, and that separates gas column density from thermal radiance contrast. The technique of the present invention utilizes a software generated digital filter constructed to correlate with only the spectrum of gas of interest, and have zero correlation with background components. Through using the improved OBS technique of the present invention, high performance and more positive cost effective gas monitoring systems and sensors may be built and implemented.

More particularly, the present invention provides a method of measuring trace gases in a gas plume. The method comprises the steps of : detecting a target scene including gas plume information and background information; filtering the background information from the gas plume information to yield a density contrast product including both gas plume column density and gas plume thermal radiance contrast values; filtering the gas plume thermal radiance contrast value from the density contrast product to yield a gas plume column density estimate; and outputting the gas plume column density estimate for gas plume anlysis purposes.

In addition, the present invention provides a system for measuring column density of a plume of gas. The system provides a sensor that measures target pixel information including background and gas plume information. A processor is connected to the sensor to store and process the target pixel information, and filter the background information from the target pixel information to yield a gas plume column density/thermal radiance contrast product. The processor also filters the gas plume column density/thermal radiance contrast product to separate the thermal radiance contrast from the gas plume column density to yield gas plume column density information. An output associated with the processor outputs the gas plume column density information from the processor for data analysis purposes.

EP 0 907 883 B1

## BRIEF DESCRIPTION OF THE DRAWINGS

FIG. 1 is a schematic view of an environment in which the OBS gas measurement technique and system of the present invention is typically implemented;
FIG. 2 is a block diagram of the system implementing the OBS measurement technique of the present invention;
FIG. 3 graphically illustrates a simulated gas plume spectrum;
FIG. 4 graphically illustrates a molecular absorption cross section of the gas plume of FIG. 3 as used to construct a system filter;
FIG. 5 is a graph of filter results for the simulated gas plume of FIG. 3;
FIG. 6 is a graph of an example target spectrum generated from an actual field data; and
FIG. 7 is a graph of column density versus scan number for measured field data.

## DETAILED DESCRIPTION OF THE PREFERRED EMBODIMENT

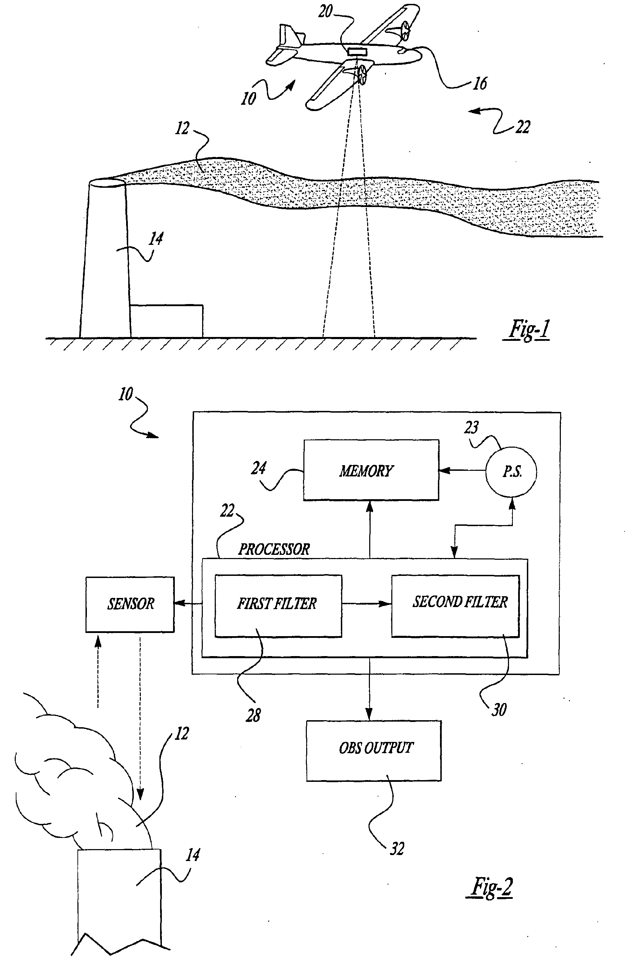

Referring to FIG. 1, an OBS measurement system 10 according to the present invention is shown measuring a gas plume 12 emitted from a smokestack 14. The system 10 is installed in an airplane 16 for maintaining purposes so that a system sensor 20 is above the plume 12 looking down through it to the ground. The sensor 20 views the ground through intervening atmosphere 22 and through the plume 12. In a background pixel (not shown), the sensor views ground through intervening atmosphere only. The simulations and data discussed below are based on this geometry; however, it should be appreciated that the system may be implemented along a wide range of distances from the plume without affecting system results.

FIG. 2 illustrates a preferred embodiment of the OBS system 10. Preferably, the system 10 is a conventional personal computer having an Intel® Pentium® 486 or higher processor. The system includes a processor 22 and associated power source 23 connected to the sensor 20. The processor 22 processes target pixel information measured by the sensor in accordance with the OBS technique of the present invention. The sensor shown is a JPL Airborne Emission Spectrometer. However, ground based sensors, such as the Hughea Mobile FTS ground spectrometer, may also be used. The OBS technique of the present invention is programmed into a computer memory 24 using conventional programming language such as $C^{++}$, and generates digital filters 28, 30 based on pixel information measured by the sensor. As will be described in detail below, the digital filters produce a plume column density measurement that is separable from the plume radiance contrast, and output through system output 32 for plume analysis purposes.

Formulation of Original OBS Orthogonal Filter

The measured radiance in a target scene, or pixel, measured by the sensor 20 can be expressed as a sum of: background radiance transmitted through the atmosphere, background radiance transmitted through the plume and through the atmosphere, plume radiance transmitter through the atmosphere, and atmospheric radiance (Equation 1).

$$\underline{\text{Equation 1}}$$

$$N_i^t = \underbrace{(1-f)\,N_i^\beta \tau_i^a}_{\substack{\text{background}\\\text{(not propogated}\\\text{through plume)}}} + \underbrace{f N_i^\beta e^{-n_c\alpha_i}\tau_i^a}_{\substack{\text{background}\\\text{(propogated}\\\text{through plume)}}} + f\underbrace{(1-e^{-n_c\alpha_i})B_i(T_p)\tau_i^a}_{\substack{\text{plume}\\\text{radiance}}} + \underbrace{N_i^a}_{\substack{\text{atmospheric}\\\text{radiance}}}$$

In Equation 1, $N_i^t$ is the measured target radiance, f is the fraction of the pixel filled by the plume, $N_i^g$ is the radiance of the scene behind the plume, $t_i^a$ is the transmission of the atmosphere between the plume and the sensor, $n_c$ is the column density, $\alpha_i$ is the absorption cross section of the molecule interest, B is the Plank function, $T_p$ is the plume temperature, and $N_i^a$ is the radiance of the atmosphere between the plume and the sensor. The subscript "i" indicates the quantifies are arrays of values at varying wavenumber.

In conventional OBS techniques, the exponent terms (describing plume emissivity and plume transmittance) were expanded to first order (Equation 2).

4

**Equation 2**

$$e^{-n_c \alpha_i} \approx 1 - n_c \alpha_i$$

This truncated expansion implicitly assumes that the plume is optically thin and that higher order terms are negligible.

Rewriting Equation 1, using approximation 2, yield Equation 3.

**Equation 3**

$$N_i^t = f \, \Delta b_i \, n_c \, \alpha_i \, \tau_i^a + N_i^s \tau_i^a + N_i^a$$

$\Delta b$ is the thermal radiance contrast (Equation 4).

**Equation 4**

$$\Delta b_i = B_i(T_p) - N_i^s$$

A more compact form of the equations is obtained if the spectra are expressed as n-dimensional vectors$_2$, where n is the number of wavelength samples in a spectrum. In vector notation Equation 3 becomes Equation 5.

**Equation 5**

$$N^t = f n_c \alpha \tau^a \Delta b + N^s \tau^a + N^a$$

A conventional OBS technique assumes that the background components of the target signal, represented by the last two terms in equations 3 and 5, can be expressed as a linear combination of a set of measured background pixels. The following paragraphs describe how the correct linear combination of backgrounds is found.

A set of basis vectors spanning the set of measured background spectra can be constructed using singular value decomposition (SVD) of the set of measured background spectra (Equation 6).

**Equation 6**

$$B = U \Lambda V^T$$

B is the set of background spectra expressed as an array of vectors, U are the principal spectral components of the background set as found by SVD. $\Lambda$ is the set of singular values describing the weights of the principal components. V is a "rotation matrix" describing how much of each principal component is in each background spectrum.

In the example application, the number of background spectra measured was fewer that the number of wavenumber, samples in a spectrum. This does not lead to an under-constrained problem, however. It has been determined that for a wide variety of scenarios the number of non-noise basis vectors in the spanning set is fewer than the number of background spectra in the measured background set. SVD is able to separate random noise degrees of freedom from actual scene spectral clutter components.

Through tests conducted in the hyper to ultra spectral regimes (n>100 wavelengths), both uplooking and down looking, it has been determined that only on the order of 10 principal components are needed to completely describe all the non-noise background variability. This statement holds true when background spectra are taken in close time and space to target spectra. The number of principal components required can be determined by looking at the singular values generated during SVD. After a certain number of principal components the singular values stop decreasing rapidly, indicating that all subsequent principal components are describing noise.

The OBS assumption, that the background radiance in a target pixel is a linear sum of measured background spectra, means that Equation 5 can be rewritten as Equation 7.

$$\text{Equation 7}$$

$$\mathbf{N^t} = fn_c \alpha \tau^a \Delta b + Uc$$

Where the background terms of Equation 5 have been replaced by the linear sum of principal components, which are in turn a linear sum of the background spectra. The coefficient array $\sigma$ are the weights of the principal components describing the background in the target pixel. The orthonormality of U is used to find $\sigma$ and remove background components from the target spectrum.

The digital filter 28 can be constructed (Equation 8) such that its normalized dot product with $N^t$ yielded the $n_c \Delta b$ product (Equation 9).

$$\text{Equation 8}$$

$$\left(\alpha\hat{\tau}^a\right)^{\perp} \equiv \alpha\hat{\tau}^a - U\left[U^T(\alpha\hat{\tau}^a)\right]$$

$$\text{Equation 9}$$

$$\frac{\left(\left(\alpha\hat{\tau}^a\right)^{\perp}\right)^T}{\left(\left(\alpha\hat{\tau}^a\right)^{\perp}\right)^T (\alpha\hat{\tau}^a)} \mathbf{N^t} = n_c \, \Delta b \equiv DCP$$

The superscript T indicates vector or matrix transpose . The atmospheric transmission, $\hat{\tau}^a$, used in constructing the filter in Equation 8, is an estimate based on knowledge of the atmospheric conditions during the measurements and is generated using the commercially available programming language FASCODE .

As discussed below, the OBS technique of the present invention is able to separate $n_c$ and $\Delta b$ by using higher order terms in exponent expansion.

Extension of OBS to Measure Absolute Column Density

If Equation 2 is completely expanded and combined with Equation 1, Equation 10 results:

$$\text{Equation 10}$$

$$\mathbf{N^t} = f\Delta b \sum_{i=1}^{\infty} \left[\frac{(-1)^{(i+1)} n_c^i \alpha^i \tau^a}{i!}\right] + Uc$$

Originally $\Delta b$ was treated as a constant. This worked for conventional OBS techniques. Simulations showed that for thick plumes there was coupling between higher order $\alpha$ terms and the $\Delta b$ spectrum which caused errors in $n_\alpha$ determination. It was found that modelling $\Delta b$ as a linear function of wavenumber (Equation 11) allowed more accurate estimation of $n_c$.

**Equation 11**

$$\Delta b_i = \overline{\Delta b} + (\overline{v} - v_i)\, b$$

In Equation 11: $\overline{\Delta b}$, $\overline{v}$, $b$ are constants and $v_i$ is the $i^{th}$ wavenumber. The average thermal radiance contrast term, $\overline{\Delta b}$, is the thermal contrast constant of original OBS.

Rewriting Equation 10, using Equation 11, yields Equation 12.

**Equation 12**

$$N^r = f\,\overline{\Delta b}\sum_{i=1}^{\infty}\left[\frac{(-1)^{(i+1)}n_c^i \alpha^i \tau^a}{i!}\right] + f\,\overline{v}b\sum_{i=1}^{\infty}\left[\frac{(-1)^{(i+1)}n_c^i \alpha^i \tau^a}{i!}\right] - v\,b\,f\sum_{i=1}^{\infty}\left[\frac{(-1)^{(i+1)}n_c^i \alpha^i \tau^a}{i!}\right] + Uc$$

By analogy to Equation 8 and 9, it would be desirable to create the filter 30 so that when applied to Equation 12 yields the coefficient of a particular $\alpha^i$. In order to do this an augmented background B' needs to be constructed (see Equation 5) so that the basis set of vectors (U') spanning B' includes principal background components (U) as well as ($\alpha^j\tau^a$), and (v $\alpha^j\tau^a$) terms. Note that j≠i.

A filter for the coefficients of the $\alpha^i$ term is generated using Equation 13.

**Equation 13**

$$\left(\alpha^i\hat{\tau}^a\right)^{\perp} = \alpha^i\hat{\tau}^a - U'\left[U'^{T}(\alpha^i\hat{\tau}^a)\right]$$

The filter (Equation 13) applied to Equation 12, yields Equation 14.

**Equation 14**

$$\frac{\left((\alpha^i\hat{\tau}^a)^{\perp}\right)^{T}}{\left((\alpha^i\hat{\tau}^a)^{\perp}\right)^{T}(\alpha^i\hat{\tau}^a)}N^r = f\,\overline{\Delta b}\,\frac{(-1)^{(i+1)}n_c^i}{i!} + f\,b\,\overline{v}\,\frac{(-1)^{(i+1)}n_c^i}{i!} - \frac{f\,b\left((\alpha^i\hat{\tau}^a)^{T}(v\alpha^i\tau^a)\right)(-1)^{(i+1)}n_c^i}{\left((\alpha^i\hat{\tau}^a)^{\perp}\right)^{T}(\alpha^i\hat{\tau}^a)i!}$$

Note that was constructed to cancel all $\alpha^j$ terms in the absorption cross section spectra with j≠i. Also, assuming is a good approximation for and noting that the magnitude of the last two terms in Equation 14 are nearly equal, yields Equation 15.

**Equation 15**

$$\frac{\left((\alpha^i\hat{\tau}^a)^{\perp}\right)^{T}}{\left((\alpha^i\hat{\tau}^a)^{\perp}\right)^{T}(\alpha^i\hat{\tau}^a)}N^r = f\,\overline{\Delta b}\,\frac{(-1)^{(i+1)}n_c^i}{i!}$$

Filtering for the coefficient of a yields:

### Equation 16

$$\frac{\left(\left(\alpha \hat{\tau}\right)^{\perp}\right)^{T}}{\left(\left(\alpha \hat{\tau}\right)^{\perp}\right)^{T}\left(\alpha \hat{\tau}\right)}N^{t}=f\,\overline{\Delta b}n_{c}$$

Equation 16 and 17 yield the conventional OBS result.

### Equation 17

$$DCP_{1}=\frac{\left(\left(\alpha \hat{\tau}\right)^{\perp}\right)^{T}}{\left(\left(\alpha \hat{\tau}\right)^{\perp}\right)^{T}\left(\alpha \hat{\tau}\right)}N^{t}=f\,\overline{\Delta b}n_{c}$$

Filtering for the coefficient of $\alpha^2$ yields:

### Equation 18

$$DCP_{2}=\frac{\left(\left(\alpha^{2}\hat{\tau}\right)^{\perp}\right)^{T}}{\left(\left(\alpha^{2}\hat{\tau}\right)^{\perp}\right)^{T}\left(\alpha^{2}\hat{\tau}\right)}N^{t}=f\,\overline{\Delta b}\frac{n_{c}^{2}}{2}$$

The filter 30, which provides an estimate for plume column density, is now simply generated by the following equation:

### Equation 19

$$\hat{n}_{c}=-2\frac{DCP_{2}}{DCP_{1}}$$

Note that $\hat{n}_c$ is a biased estimator for $n_c$ for at least two reasons:

    1) Because of system noise (assumed to be gaussian, white, and spectrally uncorrelated), The filtered measurements $DCP_1$ and $DCP_2$ will have some mean and variance. Even though $DCP_2/DCP_1$ is not necessarily the ratio of the means of $DCP_1$ and $DCP_2$.
    2) As described in more detail below, noise will "mask" higher order $\alpha$terms.

An explicit noise term has been left out of the foregoing equations. When a spectrum is measured it will include the radiances described in Equation 1 plus a vector of random noise. It is assumed that noise in each wavenumber bin is zero mean, gaussian, uncorrelated, and has a standard deviation equal to noise equivalent spectral radiance (NESR). When the linear filters described in Equations 17 and 18 are applied to an ensemble of these random spectra the standard deviation of the results are the noise equivalent density contrast products, $NE_{DCP1}$ and $NB_{DCP2}$.

## Equations 20 and 21

$$NE_{DCP1} = \frac{NESR}{\left[\left((\alpha\hat{\tau}^\lambda)^{-1}\right)^T (\alpha\hat{\tau}^\lambda)\right]^{\frac{1}{2}}}$$

$$NE_{DCP2} = \frac{NESR}{\left[\left((\alpha^2\hat{\tau}^\lambda)^{-1}\right)^T (\alpha^2\hat{\tau}^\lambda)\right]^{\frac{1}{2}}}$$

The noise equivalent $n_c$ ($NE_{nc}$) is the standard deviation of the ratio:

## Equation 22

$$\hat{n}_c \pm NE_{nc} = -2\,\frac{DCP_2 \pm NE_{DCP2}}{DCP_1 \pm NE_{DCP1}}$$

Therefore:

## Equation 23

$$NE_{nc} = 2\left[\frac{(DCP_2\,NE_{DCP1})^2}{DCP_1^4} + \frac{NE_{DCP2}^2}{DCP_1^2}\right]^{\frac{1}{2}}$$

The thermal radiance contrast can be estimated using $DCP_1$ and $DCP_2$ in a fashion similar to $n_c$ determination (Equation 24).

## Equation 24

$$\overline{\Delta b} = -\frac{DCP_1^2}{2\,\hat{f}\,DCP_2}$$

where f is an estimate of the plume fill factor.

To get plume temperature from the thermal radiance contrast, we need an estimate of the ground radiance, $N^g$. Equation 25 can then be solved for $T_p$, (Equation 26).

## Equation 25

$$\overline{\Delta b} = B_v(T_p) - \overline{N_i^g}$$

## Equation 26

$$T_p = \frac{c_2 \, \mathcal{V}}{\ln\left(\dfrac{c_1 \, \mathcal{V}^3}{(\overline{\Delta b} + \overline{N_i^g})} + 1\right)}$$

Where $B_u$ is the value of Planck's function at the spectral window's average wavelength, $\overline{N_i^g}$ is the estimated average background radiance in the target pixel, $c_1$ and $c_2$ are the coefficients of Planck's equation.

Simulation Results

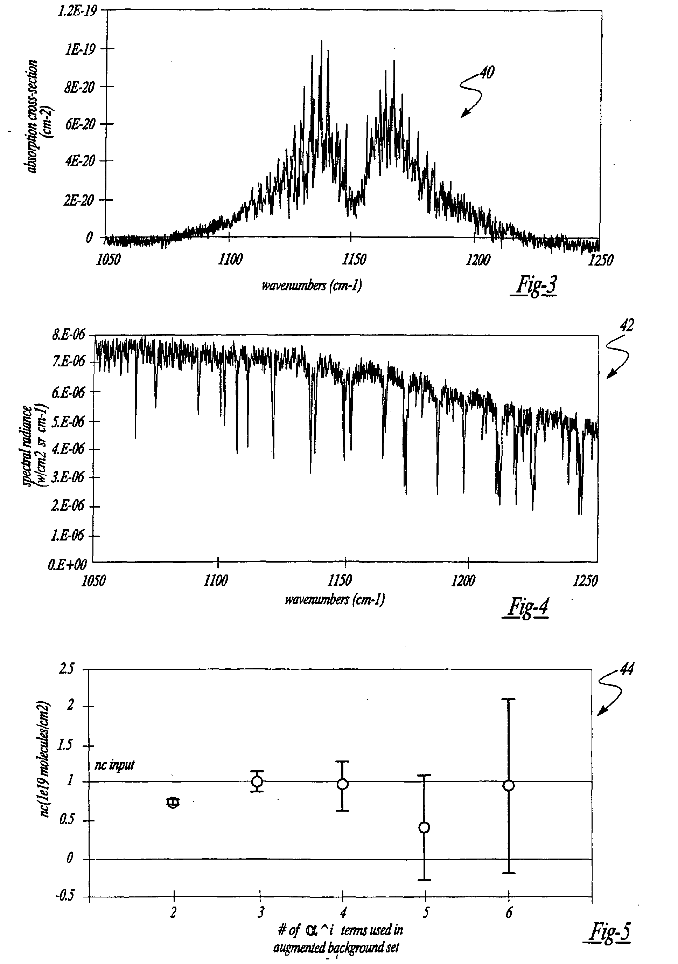

Figure 3 shows a simulated $SO_2$ plume spectrum at 40. The OBS technique of the present invention is used to extract $n_c$ of $SO_2$ in this spectrum. The simulated $SO_2$ plume spectrum 40 is simulated downlooking from 4.5km and includes: ground radiance, plume radiance and transmission atmospheric radiance and transmission, and white noise.

The parameters used to generate the spectrum shown in FIG. 3 are listed in Table 1:

Table 1

| $n_c$ of $SO_2$ | $1 \times 10^{19}$ molecule/cm$^{-2}$ |
|---|---|
| $T_p$ | 305K |
| $T_g$ | 295K |
| ground emissivity | 1 |
| fill factor | 1 |
| atmosphere model | mid-latitude winter |
| sensor altitude | 4.5 km (nadir view) |
| NESR | $1 \times 10^{-7}$ w/cm$^2$ sr cm$^{-1}$ |

The backgrounds for the simulation where a set of black body spectra generated with ground temperature varying from 290K to 300K. The peak target signal to NESR ratio in the target pixel is 10. The peak target signal to scene clutter ratio is 1/7.

FIG. 4 shows the molecular absorption cross-section of $SO_2$ used to construct the $SO_2$ filter at 42. Note that visually the $SO_2$ features are almost completely obscured by the spectral clutter in the target spectrum.

FIG. 5 shows filter results for the simulated $SO_2$ plume at 44. The x-axis is number of $\alpha^i$ terms added to the augmented background set B'. For example, if the number of $\alpha^i$ terms indicated is 2 then B' includes: the non-noise background principal components, $(\alpha^2 \tau^a)$, and $(v\alpha^2 \tau^a)$. The error bars indicate the noise equivalent column density $(NE_{nc})$ .

The estimated $n_c$ results (based on simulation) is plotted versus number of terms included in the augmented background set. Error bars indicate $NE_{nc}$. Amount of $SO_2$ in plume is indicated by the line "nc input".

The plot 44 in FIG. 5 starts with $\alpha^2$ added to B' since at least two terms are required in the expansion to determine $n_c$.

As number of terms used to generate filter increases the estimated value of $n_c$ approaches the input value. But, at the same time, noise equivalent $n_c$ $(NE_{nc})$ increases. There is a number of terms where the best estimate of $n_c$ is found. This estimate will be biased by the early cutoff of expansion terms.

Field Data Results

In the above example, data was taken with the JPL Airborne Emission Spectrometer (AES) of a plume from a smokestack. The altitude of the sensor as 15,000 feet and was nadir viewing. The data received was calibrated in units of watts/cm$^2$ sr cm$^{-1}$. The spectra was windowed to 1050-1250 cm$^{-1}$ since $SO_2$ measurements were desired.

The sensor is a linear array of 4 detectors which can be "push-broomed" to build a 4xm ultra-special image (m is the number of scans in a run). The sensor can also track a stationary target on the ground as the aircraft flies over. During scans 1-9 the sensor was push-broomed across the ground leading up to target smokestack. These 36 spectra comprised the original background set, B. During scans 9-28 the sensor locked on to the stack and viewed the plume from various angles as the aircraft flew over.

FIG. 5 shows a graph of smokestack spectral plume radiance generated from field data at 46. The emission feature between 1050 cm-1 and 1100 cm-1 is hot $CO_2$ which is also an effluent from the stack. If the $CO_2$ is not accounted for in constructing a filter for $SO_2$ the filter may couple with the $CO_2$ feature and give an incorrect $SO_2$ measurement result. To account for interferant gases (e.g., in this case, $CO_2$) the absorption spectrum of a suspected interferant is added to the augmented background set, **B'**. When a spectrum is added to **B'** the filter constructed from **B'** will not correlate with that spectrum. With $CO_2$ added to the **B'** the $CO_2$ emission will not interfere with the $SO_2$ measurement.

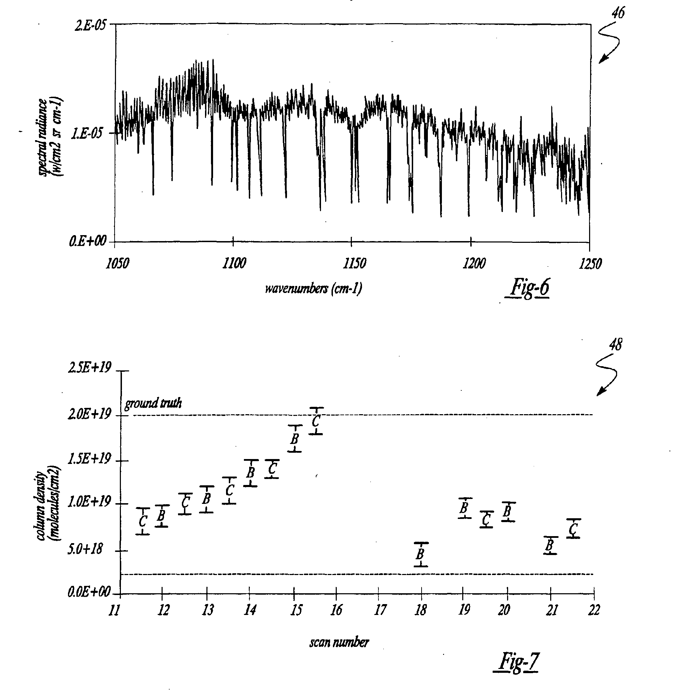

FIG. 7 shows $n_c$ estimates, calculated $NE_{nc}$ and ground truth estimates for $SO_2$ column density in the plume at 48. The error bars indicate only the $NE_{nc}$ and do not take into account any other possible systematic errors. The ground truth estimate range is indicated by the horizontal lines.

Scans 1-9 where used as background so no $SO_2$ measurements are shown for them. In scans 10, and after 21 the plume was either too thin or the thermal contrast too low to be able to make column density measurements (even though for those scans $SO_2$ could be detected). In scans 16 and 17 the plume was being viewed against the hot roof of a building. In these two scans the plume was about the same temperature as the background, so the thermal contrast was too low to make column density measurements.

Upon reading the foregoing description, it will be appreciated that the OBS technique of the present invention is a linear filtering technique based on the assumption that background scene components in a target pixel are a linear sum of measured scene background spectra. A linear filter is constructed to reject background scene components and yield plume gas column density-thermal radiance contrast products. If filters for various powers of target gas absorption spectra are constructed, absolute column density and plume temperature can be separately determined for plume analysis purposes.

Various other advantages of the present invention will become apparent to those skilled in the art after having the benefit of studying the foregoing text and drawings, taken in conjunction with the following claims.

## Claims

1. Method of determining column density ($n_c$) of a gas plume (12) or of measuring trace gases in a gas plume (12), the method based on Orthogonal Background Suppression (OBS) algorithms and comprising the steps of:

     measuring target pixel information including background information, thermal radiance contrast ($\Delta b$) information and gas plume information;
     filtering the background information and the thermal radiance contrast information ($\Delta b$) from the target pixel information to yield gas plume column density information ($n_c$); and
     outputting the gas plume column density information ($n_c$) for gas plume analysis purposes,
     **characterized in that** the step of filtering background information and thermal radiance contrast ($\Delta b$) information from the target pixel information includes the step of modeling thermal radiance contrast ($\Delta b$) as a linear function of gas plume spectrum wave number ($v_i$), wherein the linear function is $\Delta b_i = \overline{\Delta b} + (\overline{v} - \overline{v}_i)b$, where
     $\Delta b_i$ is the i-th element of the thermal radiance contrast ($\Delta b$),
     $\Delta b$ is a constant representing the average thermal radiance contrast,
     $\overline{v}$ is a constant representing the average wavenumber,
     $v_i$ is the i-th wavenumber, and
     $b$ is a constant.

2. Method of claim 1, wherein the target pixel information is represented as

$$N' = f\overline{\Delta b}\sum_{i=1}^{\infty}\left[\frac{(-1)^{(i+1)}n_c^i\alpha'\tau^a}{i!}\right] + f\overline{v}b\sum_{i=1}^{\infty}\left[\frac{(-1)^{(i+1)}n_c^i\alpha'\tau^a}{i!}\right] - vbf\sum_{i=1}^{\infty}\left[\frac{(-1)^{(i+1)}n_c^i\alpha'\tau^a}{i!}\right] + Uc$$

where
$f$ is the fraction of the pixel filled by the gas plume (12),

$n_c^i$ is the column density ($n_c$) to the power of $i$,

$\alpha^i$ is a coefficient to the power of $i$

$\tau^a$ is the transmission of the atmosphere between the gas plume (12) and the sensor (20),

$U$ are the principal spectral components of the background, and

$c$ is a coefficient array for the weights of said principal components.

3.  Method of claims 1 or 2, further comprising the steps of
    calculating a gas plume range of deviation associated with the gas plume column density information ($n_c$); and
    outputting gas plume range of deviation information with the gas plume column density information ($n_c$) to account for pixel scene noise.

4.  Method of claims 1 or 2, further comprising the step of calculating gas plume temperature ($T_p$) information from the gas plume thermal radiance contrast ($\Delta b$) information.

5.  Method of claims 1 or 2, wherein
    filtering the background information from the gas plume information yields a density contrast product including both gas plume column density ($n_c$) and gas plume thermal radiance contrast values;
    filtering the gas plume thermal radiance contrast value from the density contrast product yields a gas plume column density estimate; and
    the gas plume column density information ($n_c$) is a gas plume column density estimate.

6.  Method of claim 5, further comprising the step of generating a noise equivalent spectral radiance value based on the step of filtering the background information from gas plume information and the step of filtering the gas plume thermal radiance contrast value from the density contrast product.

7.  Method of claim 5, further comprising the steps of:

    measuring ground temperature during the step of measuring target pixel information; and
    determining gas plume temperature ($T_p$) based on the steps of measuring ground temperature, filtering the background information from the gas plume information, and filtering the gas plume thermal radiance contrast from the density contrast product.

8.  Method of claim 7, wherein the step of measuring gas plume temperature ($T_p$) is implemented by the following equation:

$$T_p = \frac{c_2 \bar{v}}{\ln\left(\frac{c_1 \bar{v}^3}{(\overline{\Delta b} + \hat{N}_i^g)} + 1\right)}$$

$$\overline{\Delta b} = B_v(T_p) - \hat{N}_i^g$$

where $B_v$ is the value of Planck's function at the spectral window's average wavelength,

$\hat{N}_i^g$ is the estimated average background radiance in the target pixel,

$c_1$ and $c_2$ are the coefficients of Planck's equation,

$\bar{v}$ is a constant and

$\overline{\Delta b}$ is the average gas plume thermal radiance contrast.

9.  System (10) for measuring column density of a plume (12) of gas, comprising:

a sensor (20) that measures target pixel information including background radiance, atmospheric radiance and gas plume radiance; and

a processor (22) connected to the sensor (20) that stores and processes the target pixel information;

a first filter (28) generated by the processor (22) that filters the background and atmospheric radiance from the target pixel information to yield a product of gas plume column density and thermal radiance contrast;

a second filter (30) generated by the processor (22) that filters the thermal radiance contrast from the product of gas plume column density and thermal radiance contrast to yield gas plume column density information; and

an output (32) associated with the processor (22) that outputs the gas plume column density information from the processor for data analysis purposes,

wherein the filters (28, 30) are adapted to perform Orthogonal Background Suppression (OBS) algorithms, **characterized in that** the first filter (28) for filtering background information and the second filter (30) for filtering thermal radiance contrast information are adapted to model thermal radiance contrast ($\Delta b$) as a linear function of gas plume spectrum wave number ($v_i$), wherein the linear function is $\Delta b_i = \overline{\Delta b_i} + (\overline{v} - v_i)b$, where

$\Delta b_i$ is the i-th element of the thermal radiance contrast ($\Delta b$),

$\overline{\Delta b}$ is a constant representing the average thermal radiance contrast,

$\overline{v}$ is a constant representing the average wavenumber,

$v_i$ is the i-th wavenumber, and

$b$ is a constant.

10. System of claim 9, wherein the target pixel information is represented as

$$N^t = f\overline{\Delta b}\sum_{i=1}^{\infty}\left[\frac{(-1)^{(i+1)} n_c^i \alpha' \tau^a}{i!}\right] + f\overline{v}b\sum_{i=1}^{\infty}\left[\frac{(-1)^{(i+1)} n_c^i \alpha' \tau^a}{i!}\right] - vbf\sum_{i=1}^{\infty}\left[\frac{(-1)^{(i+1)} n_c^i \alpha' \tau^a}{i!}\right] + Uc$$

where

$f$ is the fraction of the pixel filled by the gas plume (12),

$n_c^i$ is the column density ($n_c$) to the power of $i$,

$\alpha'$ is a coefficient to the power of $i$,

$\tau^a$ is the transmission of the atmosphere between the gas plume (12) and the sensor (20),

$U$ are the principal spectral components of the background, and

$c$ is a coefficients array for the weights of said principal components.

11. System of claim 9 or 10, wherein the processor (22) is operative to generate noise information that compensates for noise associated with the target pixel information, and/or to calculate gas plume temperature, based on the thermal radiance contrast filtered by the second filler (30), and an estimate of ground radiance as sensed by the sensor (20).

**Patentansprüche**

1. Verfahren zum Bestimmen einer Säulendichte ($n_c$) einer Abgasfahne (12) oder zum Messen von Spurengasen in einer Abgasfahne (12), wobei das Verfahren auf Algorithmen für eine Orthogonale Unterdrückung des Hintergrunds (OBS) basiert und die folgenden Schritte aufweist:

Messen einer Zielpixelinformation, die eine Hintergrundinformation, eine Information des Kontrasts ($\Delta b$) der thermischen Radianz und eine Abgasfahneninformation enthält;

Filtern der Hintergrundinformation und der Information ($\Delta b$) des Kontrasts der thermischen Radianz aus der Zielpixelinformation, um eine Information ($n_c$) der Säulendichte der Abgasfahne zu erhalten; und

Ausgeben der Information ($n_c$) der Säulendichte der Abgasfahne für Zwecke einer Analyse der Abgasfahne, **dadurch gekennzeichnet, dass** der Schritt des Filterns der Hintergrundinformation und der Information des Kontrasts ($\Delta b$) der thermischen Radianz aus der Zielpixelinformation den Schritt aufweist, dass der Kontrast ($\Delta b$) der thermischen Radianz als eine lineare Funktion von der Wellenzahl ($v_i$) des Spektrums der Abgasfahne modelliert wird, wobei die lineare Funktion $\Delta b_i = \overline{\Delta b} + (\overline{v} - v_i)b$ ist, wobei

$\Delta b_i$ das i-te Element des Kontrasts ($\Delta b$) der thermischen Radianz ist,

$\overline{\Delta b}$ eine Konstante ist, die den Durchschnitt des Kontrasts der thermischen Radianz repräsentiert,

$\overline{v}$ eine Konstante ist, die die durchschnittliche Wellenzahl repräsentiert,

$v_i$ die i-te Wellenzahl ist, und

$b$ eine Konstante ist.

2. Verfahren nach Anspruch 1, wobei die Zielpixelinformation wie folgt dargestellt wird

$$N^t = f\overline{\Delta b}\sum_{i=1}^{\infty}\left[\frac{(-1)^{(i+1)} n_c^i \alpha'\tau^a}{i!}\right] + f\overline{v}b\sum_{i=1}^{\infty}\left[\frac{(-1)^{(i+1)} n_c^i \alpha'\tau^a}{i!}\right] - vbf\sum_{i=1}^{\infty}\left[\frac{(-1)^{(i+1)} n_c^i \alpha'\tau^a}{i!}\right] + Uc$$

wobei

$f$ der Anteil der Pixel ist, die von der Abgasfahne (12) bedeckt werden,

$n_c^i$ die Säulendichte ($n_c$) zur Potenz $i$ ist,

$\alpha'$ ein Koeffizient zur Potenz $i$ ist,

$\tau^a$ die Transmission der Atmosphäre zwischen der Abgasfahne (12) und dem Sensor (20) ist,

$U$ die hauptsächlichen spektralen Anteile des Hintergrunds sind, und

$c$ eine Matrix mit Koeffizienten für die Gewichte der hauptsächlichen Anteile ist.

3. Verfahren nach Anspruch 1 oder 2, ferner aufweisend die Schritte:

Berechnen einer Schwankungsbreite der Abgasfahne, die der Information ($n_c$) der Säulendichte der Abgasfahne zugeordnet ist; und

Ausgeben der Information der Schwankungsbreite der Abgasfahne zusammen mit der Information ($n_c$) der Säulendichte der Abgasfahne, um Rauschen bei den Szeneriepixeln zu berücksichtigen.

4. Verfahren nach Anspruch 1 oder 2, ferner aufweisend den Schritt des Berechnens einer Information einer Abgasfahnentemperatur ($T_P$) aus der Information des Kontrasts ($\Delta b$) der thermischen Radianz der Abgasfahne.

5. Verfahren nach Anspruch 1 oder 2, wobei

das Filtern der Hintergrundinformation aus der Abgasfahneninformation ein Dichtekontrastprodukt ergibt, das sowohl Werte der Säulendichte ($n_c$) der Abgasfahne als auch Kontrastwerte der thermischen Radianz der Abgasfahne enthält;

Filtern des Kontrastwerts der thermischen Radianz der Abgasfahne aus dem Dichtekontrastprodukt, so dass sich eine Schätzung für die Säulendichte der Abgasfahne ergibt; und

die Information ($n_c$) der Säulendichte der Abgasfahne eine Schätzung der Säulendichte der Abgasfahne ist.

6. Verfahren nach Anspruch 5, ferner aufweisend den Schritt des Erzeugens eines Werts der rauschäquivalenten spektralen Radianz, und zwar basierend auf dem Schritt des Filterns der Hintergrundinformation aus der Abgasfahneninformation und dem Schritt des Filterns des Kontrastwerts der thermischen Radianz der Abgasfahne aus dem Dichtekontrastprodukt.

7. Verfahren nach Anspruch 5, ferner aufweisend die Schritte:

Messen der Bodentemperatur während des Schritts des Messens der Zielpixelinformation; und

Bestimmen der Abgasfahnentemperatur ($T_P$) basierend auf den Schritten des Messens der Bodentemperatur, des Filterns der Hintergrundinformation aus der Abgasfahneninformation und des Filterns des Kontrasts der thermischen Radianz der Abgasfahne aus dem Dichtekontrastprodukt.

8. Verfahren nach Anspruch 7, wobei der Schritt des Messens der Abgasfahnentemperatur ($T_P$) mittels der folgenden Gleichung implementiert ist:

$$T_p = \cfrac{c_2 \bar{v}}{\ln\left( \cfrac{c_1 \bar{v}^3}{(\overline{\Delta b} + \overline{\hat{N}_i^g})} + 1 \right)}$$

$$\overline{\Delta b} = B_v(T_p) - \overline{\hat{N}_i^g}$$

wobei $B_v$ der Wert der Planck-Funktion bei der durchschnittlichen Wellenlänge des spektralen Fensters ist,

$\overline{\hat{N}_i^g}$ die geschätzte durchschnittliche Radianz des Hintergrunds in dem Zielpixel ist,

$c_1$ und $c_2$ Koeffizienten der Planck-Gleichung sind,
$\bar{v}$ eine Konstante ist und
$\overline{\Delta b}$ der durchschnittliche Kontrast der thermischen Radianz der Abgasfahne ist.

9. System zum Messen einer Säulendichte einer Gasfahne (12) aus Abgas, mit:

einem Sensor (20), der eine Zielpixelinformation misst, die eine Hintergrundradianz, eine atmosphärische Radianz und eine Abgasfahnenradianz enthält; und
einen Prozessor (22), der mit dem Sensor (20) verbunden ist und die Zielpixelinformation speichert und verarbeitet;
einem ersten Filter (28), der mittels des Prozessors (22) realisiert ist und der die Radianz des Hintergrunds und die atmosphärische Radianz aus der Zielpixelinformation filtern, um ein Produkt aus der Säulendichte der Abgasfahne und dem Kontrast der thermischen Radianz zu erhalten;
einem zweiten Filter (30), der mittels des Prozessors (22) realisiert ist und der den Kontrast der thermischen Radianz aus dem Produkt aus der Säulendichte der Abgasfahne und dem Kontrast der thermischen Radianz filtern, um eine Information der Säulendichte der Abgasfahne zu erhalten; und
einem Ausgang (32), der dem Prozessor (22) zugeordnet ist und der die Information der Säulendichte der Abgasfahne von dem Prozessor für Zwecke der Datenanalyse ausgibt,
wobei die Filter (28, 30) dafür ausgebildet sind, Algorithmen für eine Orthogonale Unterdrückung des Hintergrunds (OBS) durchzuführen,
**dadurch gekennzeichnet, dass** der erste Filter (28) zum Filtern der Hintergrundinformation und der zweite Filter (30) zum Filtern der Information des Kontrasts der thermischen Radianz dafür ausgebildet sind, den Kontrast ($\Delta b$) der thermischen Radianz als eine lineare Funktion von der Wellenzahl ($v_i$) des Spektrums der Abgasfahne zu modellieren, wobei die lineare Funktion $\Delta b_i = \overline{\Delta b} + (\bar{v} - v_i)b$, wobei

$\Delta b_i$ das i-te Element des Kontrasts ($\Delta b$) der thermischen Radianz ist,
$\Delta b$ eine Konstante ist, die den Durchschnitt des Kontrasts der thermischen Radianz repräsentiert,
$\bar{v}$ eine Konstante ist, die die durchschnittliche Wellenzahl repräsentiert,
$v_i$ die i-te Wellenzahl ist, und
$b$ eine Konstante ist.

10. System nach Anspruch 9, wobei die Zielpixelinformation wie folgt dargestellt wird

$$N' = f\overline{\Delta b}\sum_{i=1}^{\infty}\left[\frac{(-1)^{(i+1)} n_c^i \alpha'\tau^a}{i!}\right] + f\bar{v}b\sum_{i=1}^{\infty}\left[\frac{(-1)^{(i+1)} n_c^i \alpha'\tau^a}{i!}\right] - vbf\sum_{i=1}^{\infty}\left[\frac{(-1)^{(i+1)} n_c^i \alpha'\tau^a}{i!}\right] + Uc$$

wobei

*f* der Anteil der Pixel ist, die von der Abgasfahne (12) bedeckt werden,

$n_c^i$ die Säulendichte ($n_c$) zur Potenz *i* ist,

$\alpha'$ ein Koeffizient zur Potenz *i* ist,
$\tau^\alpha$ die Transmission der Atmosphäre zwischen der Abgasfahne (12) und dem Sensor (20) ist,
*U* die hauptsächlichen spektralen Anteile des Hintergrunds sind, und
*c* eine Matrix mit Koeffizienten für die Gewichte der hauptsächlichen Anteile ist.

**11.** System nach Anspruch 9 oder 10, wobei der Prozessor (22) dafür ausgebildet ist, Rauschinformation zu erzeugen, die ein Rauschen kompensiert, das mit der Zielpixelinformation in Zusammenhang steht, und/oder eine Temperatur der Abgasfahne basierend auf dem Kontrast der thermischen Radianz zu berechnen, die vom zweiten Filter (30) gefiltert wurde, und eine Schätzung der Bodenradianz wie sie vom Sensor (20) erfasst wird.

## Revendications

**1.** Procédé de détermination de la densité sur colonne ($n_c$) d'un panache de gaz (12) ou de mesure de gaz présents à l'état de trace dans un panache de gaz (12), le procédé se basant sur des algorithmes de suppression orthogonale de l'arrière-plan (OBS) et comprenant les étapes consistant à :

mesurer des informations de pixel cible comprenant des informations d'arrière-plan, des informations de contraste de luminance énergétique ($\Delta b$) et des informations de panache de gaz ;
filtrer les informations d'arrière-plan et les informations de contraste de luminance énergétique ($\Delta b$) des informations de pixel cible pour donner des informations de densité sur colonne d'un panache de gaz ($n_c$) ; et
restituer les informations de densité sur colonne d'un panache de gaz ($n_c$) dans le but d'analyser le panache de gaz,
**caractérisé en ce que** l'étape de filtration des informations d'arrière-plan et des informations de contraste de luminance énergétique ($\Delta b$) des informations de pixel cible comprend l'étape consistant à modéliser le contraste de luminance énergétique ($\Delta b$) sous la forme d'une fonction linéaire de nombre d'ondes de spectre du panache de gaz ($v_i$), où la fonction linéaire est :

$$\Delta b_i = \overline{\Delta b} + (\bar{v} - v_i)b,$$

où
$\Delta b_i$ est le i$^{\text{ième}}$ élément du contraste de luminance énergétique ($\Delta b$),
$\overline{\Delta b}$ est une constante représentant le contraste de luminance énergétique moyen,
$\bar{v}$ est une constante représentant le nombre d'onde moyen,
$v_i$ est le i$^{\text{iéme}}$ nombre d'onde, et
*b* est une constante.

**2.** Procédé selon la revendication 1, dans lequel les informations de pixel cible sont représentées par :

$$N^t = f\overline{\Delta b}\sum_{i=1}^{\infty}\left[\frac{(-1)^{(i+1)}n_c^i\alpha^i\tau^\alpha}{i!}\right] + f\bar{v}b\sum_{i=1}^{\infty}\left[\frac{(-1)^{(i+1)}n_c^i\alpha^i\tau^\alpha}{i!}\right]$$
$$- vbf\sum_{i=1}^{\infty}\left[\frac{(-1)^{(i+1)}n_c^i\alpha^i\tau^\alpha}{i!}\right] + Uc$$

où

*f* est la fraction du pixel remplie par le panache de gaz (12),

$n_c^i$ est la densité sur colonne ($n_c$) à la puissance *i*,

$\alpha^i$ est un coefficient à la puissance *i*,

$\tau^a$ est la transmission de l'atmosphère entre le panache de gaz (12) et le capteur (20),

*U* sont les composants spectraux principaux de l'arrière-plan, et

*c* est un ensemble de coefficients pour les poids desdits composants principaux.

3. Procédé selon les revendications 1 ou 2, comprenant en outre les étapes consistant à :

   calculer une plage de déviation pour le panache de gaz associée aux informations de densité sur colonne du panache de gaz ($n_c$) ; et

   restituer une plage d'informations de déviation pour le panache de gaz avec les informations de densité sur colonne du panache de gaz ($n_c$) pour prendre en compte le bruit du lieu pixélisé.

4. Procédé selon les revendications 1 ou 2, comprenant en outre l'étape consistant à calculer des informations de température du panache de gaz ($T_p$) à partir des informations de contraste de luminance énergétique du panache de gaz ($\Delta b$).

5. Procédé selon les revendications 1 ou 2, dans lequel

   la filtration des informations d'arrière-plan des informations du panache de gaz donne un produit de contraste en densité comprenant à la fois la densité sur colonne du panache de gaz ($n_c$) et des valeurs de contraste de luminance énergétique du panache de gaz ;

   la filtration de la valeur de contraste de luminance énergétique du panache de gaz du produit de contraste en densité donne une estimation de la densité sur colonne du panache de gaz ; et

   les informations de densité sur colonne du panache de gaz ($n_c$) sont une estimation de la densité sur colonne du panache de gaz.

6. Procédé selon la revendication 5, comprenant en outre l'étape consistant à générer une valeur de luminance spectrale équivalente au bruit sur la base de l'étape de filtration des informations d'arrière-plan des informations du panache de gaz et l'étape de filtration de la valeur de contraste de luminance énergétique du panache de gaz du produit de contraste en densité.

7. Procédé selon la revendication 5, comprenant en outre les étapes consistant à :

   mesurer la température du sol lors de l'étape de mesure des informations de pixel cible ; et

   déterminer la température du panache de gaz ($T_p$) sur la base des étapes consistant à mesurer la température du sol, filtrer les informations d'arrière-plan des informations du panache de gaz et filtrer le contraste de luminance énergétique du panache de gaz du produit de contraste en densité.

8. Procédé selon la revendication 7, dans lequel l'étape de mesure de la température du panache de gaz ($T_p$) est mise en oeuvre par l'équation suivante :

$$T_p = \frac{c_2 \bar{v}}{\ln\left(\frac{c_1 \bar{v}^3}{\left(\overline{\Delta b} + \overline{\widehat{N}_i^g}\right)} + 1\right)}$$

$$\overline{\Delta b} = B_v(T_p) - \overline{\widehat{N}_i^g}$$

où $B_v$ est la valeur de la fonction de Planck à la longueur d'onde moyenne de la fenêtre spectrale,

$\overline{N_i^g}$ est la luminance d'arrière-plan moyenne estimée dans le pixel cible,

$c_1$ et $c_2$ sont les coefficients de l'équation de Planck,

$\bar{v}$ est une constante et

$\overline{\Delta b}$ est le contraste de luminance énergétique moyen du panache de gaz.

9. Système (10) permettant la mesure d'une densité sur colonne d'un panache (12) de gaz, comprenant :

un capteur (20) qui mesure des informations de pixel cible comprenant la luminance d'arrière-plan, la luminance atmosphérique et la luminance du panache de gaz ; et

un processeur (22) connecté au capteur (20) qui stocke et traite les informations de pixel cible ;

un premier filtre (28) généré par le processeur (22) qui filtre la luminance d'arrière-plan et la luminance atmosphérique des informations de pixel cible pour donner un produit de densité sur colonne d'un panache de gaz et de contraste de luminance énergétique ;

un second filtre (30) généré par le processeur (22) qui filtre le contraste de luminance énergétique du produit de densité sur colonne d'un panache de gaz et de contraste de luminance énergétique pour donner des informations de densité sur colonne d'un panache de gaz ; et

une sortie (32) associée au processeur (22) qui restitue les informations de densité sur colonne du panache de gaz en provenance du processeur pour effectuer une analyse de données,

dans lequel les filtres (28, 30) sont adaptés pour exécuter des algorithmes de suppression orthogonale d'arrière-plan (OBS),

**caractérisé en ce que** le premier filtre (28) servant à filtrer les informations d'arrière-plan et le second filtre (30) servant à filtrer les informations de contraste de luminance énergétique sont adaptés pour modéliser un contraste de luminance énergétique ($\Delta b$) sous la forme d'une fonction linéaire de nombre d'ondes de spectre du panache de gaz ($v_i$), où la fonction linéaire est :

$$\Delta b_i = \overline{\Delta b} + (\bar{v} - v_i)b,$$

où

$\Delta b_i$ est le $i^{ième}$ élément du contraste de luminance énergétique ($\Delta b$),

$\overline{\Delta b}$ est une constante représentant le contraste de luminance énergétique moyen,

$\bar{v}$ est une constante représentant le nombre d'onde moyen,

$\overline{v_i}$ est le $i^{ième}$ nombre d'onde, et

$b$ est une constante.

10. Système selon la revendication 9, dans lequel les informations de pixel cible sont représentées par :

$$N^t = f\overline{\Delta b}\sum_{i=1}^{\infty}\left[\frac{(-1)^{(i+1)}n_c^i\alpha^i\tau^a}{i!}\right] + f\overline{vb}\sum_{i=1}^{\infty}\left[\frac{(-1)^{(i+1)}n_c^i\alpha^i\tau^a}{i!}\right]$$
$$- vbf\sum_{i=1}^{\infty}\left[\frac{(-1)^{(i+1)}n_c^i\alpha^i\tau^a}{i!}\right] + Uc$$

où

f est la fraction du pixel remplie par le panache de gaz (12),

$n_c^i$ est la densité sur colonne ($n_c$) à la puissance $i$,

$\alpha^i$ est un coefficient à la puissance i,

$\tau^a$ est la transmission de l'atmosphère entre le panache de gaz (12) et le capteur (20),

*U* sont les composants spectraux principaux de l'arrière-plan, et

*c* est un ensemble de coefficients pour les poids desdits composants principaux.

**11.** Système selon la revendication 9 ou 10, dans lequel le processeur (22) est opérationnel pour générer des informations de bruit qui compensent le bruit associé aux informations de pixel cible et/ou pour calculer la température d'un panache de gaz sur la base du contraste de luminance énergétique filtré par le second filtre (30), et une estimation de la luminance du sol telle que détectée par le capteur (20).

*Fig-1*

*Fig-2*

Fig-3

Fig-4

# of α^i terms used in
augmented background set

Fig-5

21

_46_

_Fig-6_

spectral radiance (w/cm2 sr cm-1)

2.E-05

1.E-05

0.E+00

1050    1100    1150    1200    1250

wavenumbers (cm-1)

_48_

_Fig-7_

column density (molecules/cm2)

2.5E+19

2.0E+19    ground truth

1.5E+19

1.0E+19

5.0+18

0.0E+00

11    12    13    14    15    16    17    18    19    20    21    22

scan number

22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0604124 A2
- US 5528037 A
- US 5371542 A
- US 4320975 A
- US 3931462 A

### Non-patent literature cited in the description

- **A. Hayden et al.** Determination of trace-gas amounts in plumes by the use of orthogonal digital filtering of thermal-emission spectra. *Applied Optics,* 01 June 1996, vol. 35 (16), 2802-2809